# EUROPÄISCHE PATENTANMELDUNG

(11) **EP 1 391 431 A1**
(43) Veröffentlichungstag der Anmeldung: **25.02.2004**
(21) Anmeldenummer: 03017011.2
(22) Anmeldetag: 26.07.2003
(51) Int. Cl.: C03B 5/20

(54) **Verfahren und Vorrichtung zum Schmelzen und Läutern von Glas**

(30) Priorität: 09.08.2002 DE 10236521; 02.07.2003 EP 03014478
(71) Anmelder: Schott Glas, 55122 Mainz (DE); CARL-ZEISS-STIFTUNG trading as SCHOTT GLAS, 55122 Mainz (DE)
(72) Erfinder: Linz, Wilfried, 55124 Mainz (DE); Nüssle, Gerhard, 07747 Jena (DE); Lautenschläger, Gerhard, Dr., 07743 Jena (DE); Schultheis, Ferdinand, 55131 Mainz (DE)
(74) Vertreter: Weitzel, Wolfgang, Dr.-Ing.

(57) **Zusammenfassung**

Die Erfindung betrifft eine Wanne zum Herstellen einer Glasschmelze sowie zu deren Läuterung
- mit einem Wannenboden, der um das Maß H unter dem Schmelzpegel liegt;
- mit einem Läuterwall, der sich in Querrichtung über die Wannenbreite B erstreckt und dessen Oberkante um das Maß h unter dem Schmelzpegel liegt;
- im Läuterwall ist ein Wehr vorgesehen, das eine Überlaufkante für die Schmelze bildet und welches aus einer Blechplatte aus Molybdän oder Wolfram oder einem Refraktärmetall oder einer Legierung aus Refraktärmetallen besteht;
- das Wehr kann im Glasbad wenigstens in seinem oberen Bereich völlig frei stehen.

## Beschreibung

Die Erfindung betrifft ein Verfahren zum Läutern einer Glasschmelze, ferner eine Vorrichtung zum Erschmelzen und Läutern von anorganischen Verbindungen, insbesondere von Glasscherben und/oder von Glasgemenge. Dabei geht es vor allem um einen kontinuierlichen Prozess.

Es sind zahlreiche Vorrichtungen bekannt geworden, mit welchen die genannten Materialien erschmolzen oder geläutert werden können. Die Erfindung befasst sich mit Glasschmelzöfen, die eine Wanne umfassen. Die Wanne umfasst einen Schmelzbereich und einen Läuterbereich. Diese beiden Bereiche sind durch einen Wall voneinander getrennt, im allgemeinen "Läuterwall" oder "Überströmwall" genannt. Die Wanne hat einen Boden, auf dem der Wall steht. Seine Oberkante befindet sich während des Betriebes des Glasschmelzofens um ein gewisses Maß unterhalb des Schmelzspiegels.

Solche Wannen haben Oberofenbeheizung. Hierzu werden eine Reihe von Brennern vorgesehen. Diese dienen zum Zuführen von Luft oder Sauerstoff als Oxidationsmedium für den zugeführten Brennstoff.

Vor dem Wall können ferner Blasdüsen angeordnet sein. Diese befinden sich im Boden der Wanne, und zwar vor dem Wall. Sie sind in Reihen angeordnet, die quer zur Wannen-Längsrichtung und damit zur Strömungsrichtung der Schmelze verlaufen. Sie dienen dem Zuführen von Gasen.

Ebenfalls vor dem Wall und ebenfalls quer zur Hauptströmungsrichtung sind häufig Elektroden vorgesehen, die im Boden verankert sind. Eine Quer- oder Längsbeheizung sowie eine Scottschaltung sind möglich.

Die Blasdüsen und die Elektroden haben die folgende Funktion:

Der Quellpunktbereich der Schmelze muss vor dem Wall liegen. Dort muss das Glas derart stark erwärmt werden, dass es in erwärmtem Zustand beim Überströmen des Walles nicht absackt, sondern im Oberflächenbereich verbleibt. Dabei unterstützen die Blasdüsen und/oder die Elektro-Zusatzbeheizung die Wirkung eines Walles außerordentlich. Siehe das Buchwerk von Trier, "Glasschmelzöfen", Springer-Verlang 1984, Abschnitt 2.4.3. Dort zeigt Bild 2.9 eine Borosilicatglas-Wanne mit einem Wall aus keramischem Material.

In EP 0 864 543 B1 ist die Wirkung der Blasdüsen erläutert - siehe dort Seite 4, Zeilen 31 ff.. Demgemäß bewirken die Blasdüsen "Bubbler" eine Strömungswalze, wobei sie Glas von unten anziehen und an die Oberfläche des Glasbades transportieren. Hierbei sinkt kälteres Glas schneller wieder ab als heißeres Glas. Es kommt daher innerhalb der Strömungswalze zu einer Separation von heißem und kaltem Glas.

Durch die Anordnung einer Elektrodenreihe wird dieser Effekt vermindert. Hierdurch kommt es nämlich zu einer Aufwärtsströmung, die dafür sorgt, dass das Glas hauptsächlich zur Oberfläche transportiert wird, und dass eine Rückströmung verringert wird.

Aus der Druckschrift "HVG-Fortbildungskurse 1998", Verlag der DGG, 1998, Seiten 30 - 33 ist eine Glasschmelzwanne bekanntgeworden, umfassend einen Wall aus Wallsteinen mit einer Molybdäneinlage.

Jeder Überströmwall unterliegt einer starken Beanspruchung. Er erfährt im Laufe der Zeit eine Korrosion und damit eine Abnutzung und eine Verringerung seiner Lebensdauer. Die Wirkungsweise des Läuterns wird mit höher werdender Glasüberdeckung geringer.

Zur Erhöhung der Lebensdauer von keramischen Wällen im Glas werden eingebaute Wälle daher über Bohrungen in den Steinen heute mittels Luft oder Wasser gekühlt. Die Kühlung hat den Nachteil, dass auch dem überströmenden Glas soviel Wärme entzogen wird, dass es nach dem Wall nicht im Oberflächenbereich verbleibt. Das kann zum Austrag ungenügend geläuterten Glases aus der Schmelzwanne führen. Bis zum Wirksamwerden der Kühlung wird durch Korrosion der Abstand zwischen Glasbadoberfläche und Walloberfläche deutlich erhöht. Es gibt weiter eine Vielzahl von Vorschlägen und Versuchen statt eines Walls eine hochgezogene Stufe als sogenannte Läuterbank im Schmelzbassin nach dem Quellpunkt anzuordnen, um das zu läuternde Glas beim Überströmen zwangsläufig eine längere Zeit in der Nähe der Glasbadoberfläche zu halten. Eine solche Läuterbank ist in EP 086 4 543 geschützt. Die Läuterbank hat in Richtung des Glasflusses eine Länge von 800 - 2000 mm und hat in der Höhe einen Abstand von maximal 300 mm von der konstruktiv vorgesehenen Glasbadoberfläche. Eine solche Läuterbank hat den Nachteil, dass das Glas längere Zeit bei den üblichen hohen Läutertemperaturen von über 1600° C im Kontakt mit dem Feuerfestmaterial der Läuterbank ist. Eine Verunreinigung des fertig geläuterten Glases mit Korrosionsprodukten des Feuerfestmateriales kann nicht ausgeschlossen werden. Infolge von Verschleiß des Feuerfestmateriales bleibt während der Wannenreise die Höhe der Läuterbank über die Wannenbreite nicht konstant. Das kann zu bevorzugten Strömungsbahnen des Glases auf der Läuterbank und zum Austrag ungenügend geläuterten Glases führen.

Der Erfindung liegt die Aufgabe zugrunde, ein Verfahren zum Läutern einer Glasschmelze zu entwickeln, welches durch einen hohen Wirkungsgrad, insbesondere durch die Vermeidung des Austrages von ungeläutertem Glas bei geringem Aufwand charakterisiert ist. Vorrichtungsgemäß gilt es, einen über die gesamte Laufzeit hohen, ungekühlten Wall aus gegenüber geschmolzenen Gläsern bei hohen Temperaturen über beständigen Materialien in einer Schmelzwanne so anzuordnen, dass im Zusammenwirken von Oberofenbeheizung und wahlweise direkter elektrischer Beheizung des Glases vor dem Wall das Glas in einer über die gesamte Wannenbreite ausgedehnten Quellzone mit möglichst niedriger, gleichmäßig verteilten Geschwindigkeit aufsteigt. Dabei soll eine Temperaturerhöhung des Glases von 50 - 150 K bei gleichzeitiger Druckentlastung von 0,2 - 0,3 bar erreicht werden.

Die erfindungsgemäße Lösung ist durch die Merkmale des Anspruchs 1 charakterisiert.

Erfindungsgemäß wird dazu eine Glasschmelze zum Läutern über einen Läuterwall geführt, der im wesentlichen aus einer quer und senkrecht zur Fließrichtung der Glasschmelze angeordneten Platte besteht. Diese bildet ein Wehr.

Die Wirkung der Platte gestaltet sich dabei wie folgt: Die heiße Glasschmelze wird in Fließrichtung der Schmelze vor der Platte nach oben, zur Glasbadoberfläche hin befördert und verbleibt auch noch hinter der Platte für eine längere Zeit und über eine lange Strecke an der Glasbadoberfläche. Es steht somit genügend Zeit und Raum an der Oberfläche zur Verfügung, um die Glasschmelze effektiv zu läutern. Die Blasen steigen dabei aus der heißen und damit niedrigviskosen Glasschmelze von der Glasbadoberfläche auf. Die Glasschmelze selbst hat über eine längere Zeit und über eine längere Strecke (beispielsweise bis zu einer Erstreckung von 3 m hinter der Platte) eine genügend hohe Temperatur und befindet sich ausreichend lang an der Oberfläche. Diese ist ferner nur an den Rändern der Schmelzwanne bzw. des Läuterteils der Schmelzwanne mit einer relativ kleinen Fläche von feuerfestem Material in Kontakt. Der Verschleiß von Feuerfestmaterialien durch die heißere Glasschmelze ist gegenüber den aus dem Stand der Technik bekannten Läuterwällen daher viel geringer.

Die Erfinder haben somit erkannt, dass mit einer erfindungsgemäß quer und senkrecht zur Strömungsrichtung der Glässchmelze angeordneten Platte eine bessere und wirtschaftlichere Läuterung möglich ist, als mit bisher bekannten Konstruktionen.

Erfindungsgemäß wird die Dicke der Platte derart ausgewählt, dass sie den Strömungskräften der Glasschmelze standhält. Größere Dicken sind nicht erforderlich. Die Dicke der Platte ergibt sich somit als Funktion der durch die fließende Glasschmelze bedingten Kraft auf die an der Platte wirksame Fläche, so dass durch diese eine Gegenkraft zumindest gleicher Größe erzeugt wird, ohne dass die Platte aus ihrer Befestigung oder Verankerung gerissen wird oder sich stark elastisch verformt.

Als Platte wird vorzugsweise eine Blechplatte aus einem Refraktärmetall oder aus einer Legierung aus einem Refraktärmetall eingesetzt. Vorzugsweise werden Molybdän oder Wolfram oder mit diesen gebildete Legierungen verwendet. Die Platte selbst ist fest an der Schmelzwanne befestigt oder aber mit wenigstens einem Teil der Schmelzwanne verbunden, je nach Ausführung der Schmelzwanne.

Der Kerngedanke der Erfindung besteht somit in der Anordnung eines mittels einer Platte gebildeten Wehres aus einem Material, das korrosionsbeständig oder weitgehend korrosionsbeständig ist. Als Material kommt ein Refraktärmetall in Betracht, beispielsweise Molybdän oder Wolfram oder Legierungen aus diesen.

Die Platte kann vorzugsweise einteilig ausgeführt sein oder aber aus einer Mehrzahl miteinander verbundener Teilplatten bestehen. Die Lagerung bzw. Befestigung der Platte erfolgt wenigstens indirekt in der Wanne, d. h. entweder direkt an der Wannenwandung oder über in dieser angeordnete Verankerungsmittel.

Das Wehr kann die Gestalt einer Platte haben, die nur wenige Zentimeter stark ist, beispielsweise zwischen einem und fünf Zentimetern, aber auch stärker oder weniger stark sein kann. Das Wehr hat eine im wesentlichen, vorzugsweise horizontale Überströmkante. Diese befindet sich im Betrieb nur in geringem Abstand unter dem Spiegel der Schmelze, beispielsweise in einem Abstand von 25 bis 250 mm. Auch ein Bereich von zwischen 50 und 150 mm ist denkbar.

Das Wehr bzw. die Platte muss sich nicht unbedingt bis zum Wannenboden hin erstrecken. Die unteren Bereiche können somit auch aus einem anderen Material gebildet sein, beispielsweise aus Feuerfestmaterial. Die Hintergründe der Erfindung sind die folgenden:
* Weil das Wehr bzw. die Platte aufgrund der Materialauswahl nicht korrodiert, verbleibt die Oberkante stets auf ein- und derselben geodätischen Höhe, und zwar nicht nur viele Monate, sondern im Verlaufe der gesamten einer Wannenreise. Dies bedeutet, dass - bei gegebenem Pegel der Schmelze in der Wanne - die sogenannte Überdeckung, das heißt der vertikale Abstand zwischen Oberkante des Wehres bzw. der Platte und dem Schmelzespiegel - unverändert bleibt.
* Dies bedeutet wiederum, dass die Überdeckung sehr gering bemessen sein kann. Die Schmelzeschicht, die über die Oberkante des Wehres bzw. der Platte hinwegströmt, ist somit relativ dünn.
* Hieraus folgt, dass der Weg, den die einzelne, in der Schmelze befindliche Blase im Bereich der Überströmkante des Wehres und weiter stromabwärts zum Schmelzespiegel zurückzulegen hat, gering ist. Das Austreten von Blasen aus der Schmelze wird hierdurch begünstigt.
* Bekanntlich nimmt die Temperatur des Schmelzbades von unten nach oben zu. Dies bedeutet, dass die Temperatur der Schmelze im Bereich des Spiegels größer als im Bereich des Wannenbodens ist. Da die Oberkante des Wehres nahe beim Schmelzespiegel liegt, tritt nur Schmelze über die Oberkante des Wehres, die eine besonders hohe Temperatur hat. Da auch die Viskosität dieser sehr heißen Schicht der überströmenden Schmelze gering ist, wird das Aufsteigen von Blasen aus der Schmelze zum Spiegel wiederum begünstigt.

Die Vorteile der Erfindung lassen sich auch wie folgt charakterisieren:
- ein Freisetzen von Läutergasen, bestehend vorwiegend aus Sauerstoff, Halogeniden oder Sulfat aus dem Glas
- ein Eindiffundieren von Läutergasen in vorhandene Restblasen im Glas
- eine Vergrößerung der Restblasen
- ein Eindiffundieren von im Glas gelösten Gasen in die vergrößerten Blasen
- ein Verbleiben des aufsteigenden Glases nach Überströmen des Walls an der Glasbadoberfläche
- ein bis zu 100%-iges Austreten der vergrößerten Blasen aus der Glasbadoberfläche.

### Zusammenfassend kann folgendes gesagt werden:

Durch Anwendung der Erfindung wird die Läuterwirkung effizienter, bezogen auf die Volumeneinheit der zu behandelnden Schmelze. Dies bedeutet, dass im Schmelzbereich wie im Läuterbereich zum Erzielen einer bestimmten Glasqualität niedrigere Temperaturen angewandt werden können, oder dass alternativ hierzu bei einer bestimmten gewünschten Glasqualität und bei gleich großer Temperatur wie bisher ein höherer Durchsatz erzielt werden kann.

Es lassen sich somit einzeln oder in Kombination die Parameter Glasqualität, Durchsatz, Energieaufwand durch die Erfindung günstig beeinflussen.

Die Erfindung ist anhand der Zeichnung näher erläutert. Darin ist im Einzelnen folgendes dargestellt:
- Figur 1: zeigt in einer perspektivischen Ansicht eine Wand eines Glasschmelzofens. Die eine Längsseitenwand ist hierbei weggelassen. Der Wall weist ein Wehr auf, das mit Feuerfestmaterial verkleidet ist.
- Figur 2: zeigt eine zweite Ausführungsform einer erfindungsgemäßen Wanne. Die Darstellung entspricht jener von Figur 1. Jedoch ist das Wehr nur nach Wegkorrosion des Feuerfestmateriales voll wirksam im Originalzustand in der Glasschmelze erhalten.
- Figur 3: zeigt eine dritte Ausführungsform einer erfindungsgemäßen Wanne in einer Aufrissansicht. Das Wehr ist nur zum Teil mit Feuerfestmaterial verkleidet.
- Figur 4: zeigt eine vierte Ausführungsform einer Wanne in schematischer Darstellung.
- Figur 5: zeigt die Wanne gemäß Figur 4 in Draufsicht.

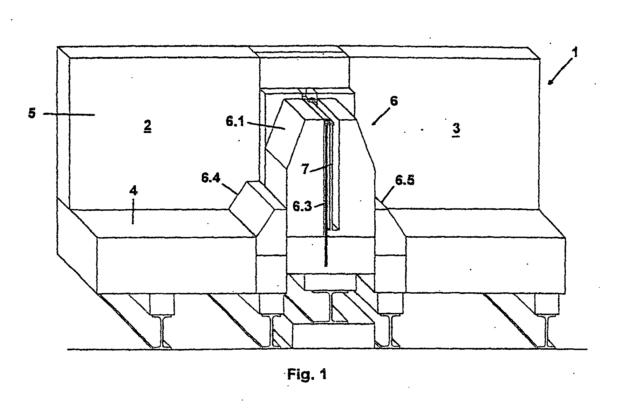

Die in Figur 1 dargestellte, erfindungsgemäß gestaltete Vorrichtung, insbesondere Wanne 1 eines Glasschmelzofens weist einen Schmelzbereich 2 und einen Läuterbereich 3 auf, ferner einen Wannenboden 4. Von den beiden Längsseitenwänden ist nur eine Wand 5 gezeigt. Die andere Längsseitenwand ist aus Gründen der Klarheit weggelassen, desgleichen die beiden Stirnwände.

Auch ist es denkbar, eine Feuerfestverkleidung zu verwenden, die nur mit einer Oxidations-Schutzschicht versehen ist, oder die für die Inbetriebnahme unter Schutzgas beziehungsweise reduzierender Atmosphäre steht.

Schmelzbereich 2 und Läuterbereich 3 sind durch einen Läuterwall 6 voneinander getrennt. Wie man sieht, ragt der Läuterwall 6 senkrecht aus dem Wannenboden 4 heraus.

In den Läuterwall 6 ist ein Wehr in Form einer Platte 7 integriert. Dabei handelt es sich um eine Platte 7, die sich über die Breite des Innenraumes der Wanne 1 hinwegerstreckt, somit zwischen den beiden Längsseitenwänden. Es kann sich um eine durchgehende Platte 7 handeln, aber auch um mehrere aneinanderbefestigte Platten. Die Platte erstreckt sich dabei quer und senkrecht zur Fließrichtung der Glasschmelze.

Wie man sieht, ist die Platte 7 in einen Spaltraum im Läuterwall 6 eingesteckt. Im dargestellten Zustand ist diese völlig eingetaucht, so dass die Oberkante des Wehres auf derselben Höhe liegt, wie die Oberkante des Läuterwalls 6.

Die Oberkante der Platte 7 befindet sich um einen Abstand h unterhalb des Schmelzspiegels 8 (h = 50 - 250 mm, vorzugsweise 100 mm).

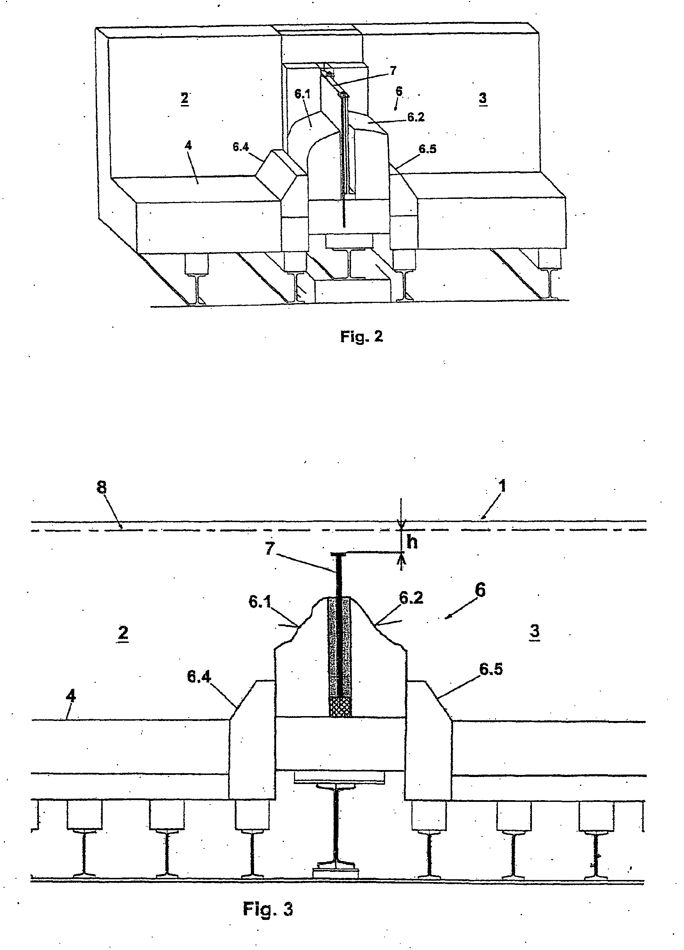

Bei den Ausführungsbeispielen gemäß der Figuren 1 bis 3 befindet sich vor dem Läuterwall 6 sowie dahinter jeweils eine Stufe 6.4, 6.5. Diese Stufen haben sich bei größeren Badtiefen bezüglich der Lösung der gestellten Aufgabe als zweckmäßig erwiesen.

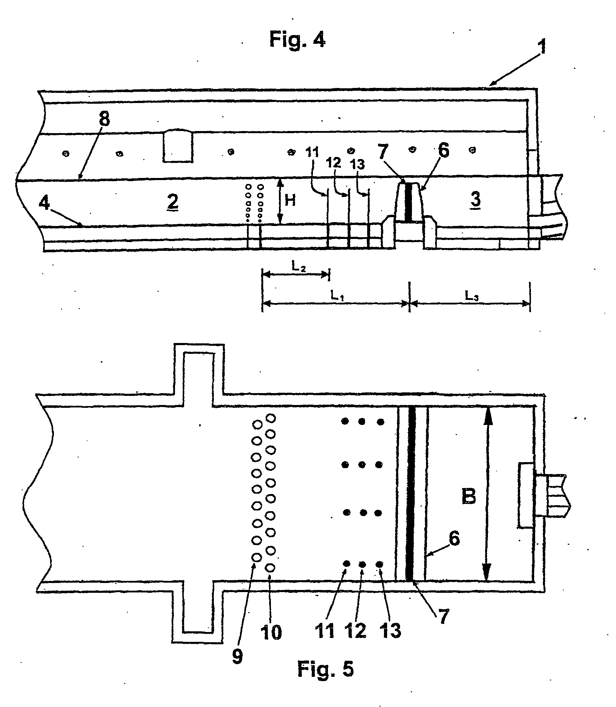

Bei der einer weiteren Ausführungsform einer Wanne 1 für einen Glasschmelzofen gemäß der Figuren 4 und 5 sind weitere Einzelheiten erkennbar:

Es sind zwei Reihen 9, 10 von Blasdüsen vorgesehen. Diese sind in den Wannenboden 4 angeordnet. Sie verlaufen quer zur Längsrichtung der Wanne 1, somit in Hauptströmungsrichtung.

Den Blasdüsen 9, 10 sind drei Reihen 11, 12, 13 von Elektroden nachgeschaltet.

Die Reihe Blasdüsen und die Reihen von Elektroden befinden sich vor dem Läuterwall 6.

Man beachte die folgenden Maße:
Die lichte Weite des Wannenraumes beträgt B. Siehe Figur 5.

Der Schmelzstand beträgt H - siehe Figur 4. Dies bedeutet mit anderen Worten, dass der Wannenboden 4 um das Maß H unter dem Schmelzepegel 8 liegt.

Der Abstand zwischen der Blasdüsenreihe 10 und dem Wehr, insbesondere der Platte 7 beträgt L₁. Dabei beträgt L₁ im allgemeinen das 2- bis 5-fache des Maßes H. Es kann auch einen Wert dazwischen annehmen, beispielsweise das 3-fache oder das 4-fache oder das 4,5-fache.

Der Abstand L₂ zwischen der in Haupt-Strömungsrichtung letzten Blasdüsenreihe 10 und der in Haupt-Strömungsrichtung vorderen Elektrodenreihe 11 beträgt im Allgemeinen das 0,5 bis 3-fache des Maßes H. Es kann auch innerhalb des genannten Bereiches liegen, somit das einfache oder das 1,5-fache betragen.

Das Wehr, insbesondere die Platte 7 weist - in Haupt-Strömungsrichtung gesehen - , somit in Längsrichtung der Wanne 1, einen Abstand von L₃ zur stromabwärtsgelegenen Stirnwand der Wanne 1 auf.

Gemäß einer bevorzugten Ausführungsform der Erfindung wird vorgesehen, dass das Wehr, insbesondere die Platte 7 aus einem Blech aus Molybdän, Wolfram oder überwiegend aus Mo oder Wo enthaltenden Legierungen oder anderen Refraktärmetallen geringer Dicke mit den Abmessungen bis zu Wannenbreite B x Glasbadhöhe H besteht und durch im Wannenboden verankerte Stützelemente aus geeigneten Refraktärmetallen verstärkt ist und so im Glasbad ungekühlt frei stehen kann. Bei geringen Wannenbreiten sind die Stützelemente nicht notwendig.

Der Läuterwall 6 kann die weiteren folgenden Merkmale aufweisen:
* er ist in einer rekuperativ oder regenerativ beheizten air-fuel-Wanne oder in einer oxy-fuel-Wanne oder gemischt beheizten Wanne mit oder ohne EZH eingebaut.
* er ist geeignet für alle zu läuternden Gläser, zum Beispiel für Natron-Kalk-Gläser, alkalihaltige Borosilikatgläser, alkalifreie Borosilikatgläser oder Aluminosilikatgläser.
* er ist geeignet für alle verwendbaren Läutermittel, beispielsweise oxidische Läutermittel wie As₂O₃, Sb₂O₃, SnO₂, CeO₂, MoO₃, Halogenide wie LiCL, NaCl, KCI, BaCl₂, SrCl₂ oder Sulfate.
* das Blech des Läuterwalls ist an den beiden Seitenwänden (Palisaden) zwischen speziellen Palisadensteinen eingebettet.
* das Blech des Läuterwalles kann beim Antempern der Wanne ist durch Beschichtung und/oder Abdecken mit Glasplatten und Glasgrieß gegen Oxidation geschützt, oder es wird reduzierend eingeschmolzen.
* beim Vollschmelzen der Wanne werden die aus unterschiedlichen Glasständen vor und hinter dem Wall resultierenden Glasdrücke durch vor und hinter dem Mo- oder Wo-Blech eingebaute Wallsteine oder Stützen aufgenommen.
* beim Vollschmelzen von beiden Seiten kann auf Wallsteine beziehungsweise Stützen verzichtet werden.
* das Blech des Läuterwalls steht auch bei fortschreitender Korrosion der Wallsteine ungekühlt in voller Höhe im Glasbad, so dass die Funktion des Läuterwalls während der gesamten Wannenreise ohne Einschränkung gewährleistet ist.
* das Blech des Läuterwalles kann zum Schutze gegen Korrosion mit geeigneten Refraktärmaterialien beschichtet oder verkleidet werden.

Ein erfindungsgemäßer Läuterwall 6 kann somit ungekühlt sein. Er ist geeignet zum Läutern von Gläsern mit hohen Anforderungen an Blasenfreiheit und Restgasgehalte im Bassin eines Glasschmelzofens mit Oberofenbeheizung und wahlweise direkter elektrischer Beheizung über Elektroden im Glasbad bestehend aus Schmelzteil, Läuterteil und Durchfluss zur Entnahme des geschmolzenen und geläuterten Glases. Korrosionsprodukte des Wallmateriales werden vermieden, beispielsweise Schlieren oder Partikel.

Der erfindungsgemäße Läuterwall 6 wird zweckmäßigerweise derart angeordnet, dass im Zusammenwirken von Oberofenbeheizung mittels Brennern und wahlweise elektrischer Beheizung mit mindestens einer Reihe Elektroden und/oder mindestens einer Reihe Blasdüsen quer zur Glasströmung in der Quellzone vor dem Wall noch Restblasen enthaltendes Glas bei Temperaturen über 1600° C (oder niedrigere Temperaturen) gleichmäßig über die Wannenbreite so langsam aufsteigt, dass während des Aufstieges eine Temperaturerhöhung des Glases von 50 - 150 K bei gleichzeitiger Druckentlastung von 0,2 - 0,3 bar erreicht wird und das Glas infolge seiner geringeren Dichte gegenüber dem Glas nach dem Wall nach Überströmen des Walls an Glasbadoberfläche verbleibt und dabei ausreichende Zeiträume gewährleistet werden, dass in der aufsteigenden Glasströmung freigesetzte Läutergase als auch im Glas gelöste Gase wie CO₂, H₂O, N₂, SO₂ in die Restblasen eindiffundieren und diese soweit vergrößern, dass sie nach dem Wall zur Glasbadoberfläche aufsteigen und aus der Grenzschicht Glasbadoberfläche, Oberatmosphäre austreten können.

Der wesentliche Gedanke der Erfindung ist die genannte Platte 7, die insbesondere als Blechplatte vorliegt. Liegt diese stets unter dem Schmelzespiegel, so besteht keine oder nur geringe Gefahr der Korrosion.

Die Steine des Läuterwalls 6 haben die Funktion des Schutzes und des Stützens der Platte 7. Die Platte 7 behält ihre Funktion bei.

## Patentansprüche

1. Verfahren zum Läutern einer Glasschmelze **dadurch gekennzeichnet, dass** die Glasschmelze über einen Läuterwall (6) geführt wird, wobei der Läuterwall (6) im wesentlichen aus einer quer und senkrecht zur Fließrichtung der Glasschmelze angeordneten Platte (7) besteht.

2. Verfahren nach Anspruch 1, **dadurch gekennzeichnet, dass** als Platte (7) eine Platte (7) aus einem Refraktärmetall oder aus einer Legierung aus Refraktärmetall eingesetzt wird.

3. Verfahren nach einem der Ansprüche 1 oder 2, **dadurch gekennzeichnet, dass** als Platte (7) eine Platte aus Molybdän oder Wolfram oder deren Legierung eingesetzt wird.

4. Verfahren nach einem der Ansprüche 1 - 3, **dadurch gekennzeichnet, dass** als Platte (7) eine Platte verwendet wird, die ortsfest mit der Schmelzwanne (1 ) gelagert ist, wobei diese mit wenigstens einem Teil der Schmelzwanne (1 ) verbunden ist.

5. Verfahren nach einem der Ansprüche 1 - 4, **dadurch gekennzeichnet, dass** die Dicke der Platte (7) als eine Funktion der Strömungskräfte der Glasschmelze derart gewählt wird, dass durch diese wenigstens eine Gegenkraft zur Strömungskraft der Glasschmelze erzeugt, die dieser betragsmäßig entspricht, ohne eine Verformung oder Lösung der Verbindung der Platte (7) mit der Wanne (1 ) hervorzurufen.

6. Vorrichtung zum Schmelzen und Läutern einer Glasschmelze, insbesondere Wanne (1 )
6.1 mit einem Wannenboden (4), der um ein Maß H unter dem Schmelzpegel (8) liegt;
6.2 mit einem Läuterwall (6), der sich in Querrichtung über die Wannenbreite B erstreckt und dessen Oberkante um ein Maß H unter dem Schmelzpegel (8) liegt;
6.3 der Läuterwall (6) besteht im wesentlichen aus einer quer und senkrecht zur Fließrichtung der Glasschmelze angeordneten, ein Wehr bildenden Platte (7).

7. Vorrichtung nach Anspruch 6, **dadurch gekennzeichnet, dass** die Platte (7) in wenigstens ihrem oberen Bereich im Glasbad freisteht.

8. Vorrichtung nach Anspruch 6 oder 7, **dadurch gekennzeichnet, dass** die Platte (7) eine Überlaufkante für die Schmelze bildet und aus einem korrosionsbeständigen Werkstoff besteht.

9. Vorrichtung nach einem der Ansprüche 6 - 8, **dadurch gekennzeichnet**, das die Platte (7) aus einem Refraktärmetall oder aus einer Legierung von Refraktionsmetallen besteht.

10. Vorrichtung nach Anspruch 9, **dadurch gekennzeichnet, dass** die Platte (7) aus einer Blechplatte aus Molybdän oder Wolfram oder deren Legierungen besteht.

11. Vorrichtung nach einem der Ansprüche 6 - 10, **dadurch gekennzeichnet, dass** die Platte (7) mit der Schmelzwanne (11 ) verbunden ist oder in Teilen der Schmelzwanne (1 ) fest verankert ist.

12. Vorrichtung nach einem der Ansprüche 6 - 11, **dadurch gekennzeichnet, dass** die Dicke der Platte (7) als Funktion der durch die fließende Glasschmelze bedingten Strömungskräfte derart gewählt ist, dass diese den Strömungskräften standhält.

13. Vorrichtung nach einem der Ansprüche 6 - 12, **gekennzeichnet durch** die folgenden Merkmale:
13.1 der Wannenboden (4) weist quer zur Längsrichtung der Wanne (1 ) verlaufende Reihen (9, 10) von Düsen zum Einleiten von Gasen in die Schmelze auf;
13.2 der Wannenboden (4) weist quer zur Längsrichtung der Wanne (1 ) verlaufende, den Düsenreihen (9, 10) in Strömungsrichtung nachgeschaltete Reihen (11, 12, 13) von Elektroden auf;
13.3 der Abstand L₁ zwischen den in Strömungsrichtung letzten Düsen (10) und dem Läuterwall (6) beträgt das 2- bis 5-fache des Maßes H;
13.4 der Abstand L₂ zwischen den in Strömungsrichtung letzten Düsen (10) und den in Strömungsrichtung vorderen Elektroden (11 ) beträgt das 0,5-bis 2-fache des Maßes H.

14. Vorrichtung nach einem der Ansprüche 1 bis 13, **dadurch gekennzeichnet, dass** der horizontale Abstand L₃ zwischen der Platte (7) und der stromabwärts gelegenen Stirnwand der Wanne (1 ) wenigstens das 2- bis 3-fache des Maßes H beträgt.

15. Vorrichtung nach einem der Ansprüche 1 bis 14, **dadurch gekennzeichnet, dass** die Platte (7) an den beiden Seitenwänden der Wanne (1 ) zwischen Palisadensteinen eingebettet ist.

16. Vorrichtung nach einem der Ansprüche 6 bis 15, **dadurch gekennzeichnet, dass** die Platte (7) beim Antempern der Wanne (1) durch Beschichten und Abdecken mit Glasplatten und Glasgrieß gegen Oxidation geschützt wird.
